# EUROPÄISCHE PATENTSCHRIFT

(11) **EP 2 317 661 B1**
(45) Veröffentlichungstag und Bekanntmachung des Hinweises auf die Patenterteilung: **02.12.2015**
(21) Anmeldenummer: 10006905.3
(22) Anmeldetag: 14.01.2004
(51) Int. Cl.: H04B 1/38, H04W 88/08

(54) **Basisstation**
Base station
Station de base

(30) Priorität: 11.03.2003 DE 10311675
(43) Veröffentlichungstag der Anmeldung: 04.05.2011
(62) Teilanmeldung aus: 04000563.9
(73) Patentinhaber: Mitel Deutschland GmbH, 10997 Berlin (DE)
(72) Erfinder: Balow, Peter, Dipl.-Ing., 12559 Berlin (DE); Petersen, Mike, Dipl.-Ing., 24582 Wattenbek (DE)
(74) Vertreter: Derry, Paul Stefan

(56) Entgegenhaltungen:
- EP-A- 1 061 718
- "Radio Equipment and Systems (RES); Digital Enhanced Cordless Telecommunications (DECT); Common Interface (CI); Part 3: Medium Access Control (MAC) layer; ETS 300 175-3", ETSI STANDARDS, EUROPEAN TELECOMMUNICATIONS STANDARDS INSTITUTE, SOPHIA-ANTIPO, FR, Bd. DECT, Nr. Second Edition, September 1996 (1996-09), XP014012241, ISSN: 0000-0001

## Beschreibung

Die Erfindung bezieht sich auf eine Basisstation mit einer Sendeeinrichtung, die nach einem vorgegebenen Funkstandard, insbesondere DECT-Standard, arbeitet.

Eine solche Basisstation ist im ETSI-Standard ETS 300 175-3 detailliert beschrieben.

Die europäische Patentanmeldung EP 1 061 718 bezieht sich auf eine Basisstation für ein mobiles Telefon-Handgerät. Die Basisstation hat einen Normalbetriebszustand, in dem sie ein Synchronisationssignal für das Handgerät sendet. In einem Ruhezustand sendet sie kein Synchronisationssignal. Die Basisstation ist in der Lage, den Ruhezustand einzunehmen, wenn ein Sensor die Anwesenheit des Handgeräts an der Basisstation erfasst.

Der Erfindung liegt bezüglich einer solchen Basisstation die Aufgabe zugrunde, diese zu verbessern; insbesondere soll die gesundheitliche Belastung bei der Benutzung derartiger Basisstationen reduziert werden.

Diese Aufgabe wird erfindungsgemäß durch die kennzeichnenden Merkmale des Anspruchs 1 gelöst. Vorteilhafte Ausgestaltungen der erfindungsgemäßen Basisstation sind in auf den Anspruch 1 rückbezogenen Unteransprüchen beschrieben.

Gemäß einer ersten Variante der erfindungsgemäßen Basisstation ist vorgesehen, dass im Falle eines Sendebetriebs nach dem DECT-Standard die Sendebursts in der weiteren Betriebsart ausschließlich auf die Frames 0 und 8 beschränkt werden. Ein Senden innerhalb der Frames 0 und 8 ist erforderlich, wenn eine Synchronisation zwischen den Mobilfunkendgeräten und der Basisstation aufrechterhalten werden soll. Über die Frames 0 und 8 können beispielsweise Qt-Meldungen übertragen werden.

Im Ergebnis sendet die Basisstation somit lediglich alle 80 ms Informationen aus, so dass es zu einer sehr reduzierten Ausstrahlung elektromagnetischer Strahlung kommt. Dabei wird jedoch aufgrund des Aussendens von Sendebursts in den Frames 0 und 8 sichergestellt, dass eine Synchronisation zwischen der Basisstation und den Mobilfunkendgeräten aufrecht erhalten bleibt.

Gemäß einer zweiten Variante der erfindungsgemäßen Basisstation ist vorgesehen, dass diese ausschließlich einmal in der Sekunde elektromagnetische Strahlung erzeugt. Bei entsprechender Anpassung der Synchronisationsalgorithmen ist es nämlich möglich, eine Synchronisation zwischen der Basisstation und den Mobilfunkendgeräten selbst dann zu erreichen, wenn eine Synchronisation nur einmal pro Sekunde erfolgt.

Vorteilhaft ist die Basisstation derart ausgestaltet, dass es selbsttätig oder benutzerseitig initiiert zu einem Umschalten von der Normalbetriebsart in die weitere Betriebsart und umgekehrt kommt. Bei einer solchen Ausgestaltung der Basisstation ist somit gewährleistet, dass der Benutzer selbst entscheiden kann, in welcher Betriebsart die Basisstation betrieben werden soll; darüber hinaus kann - je nach den Betriebsbedingungen - die Basisstation "selber" entscheiden, welche Betriebsart die günstigste ist und den Sendebetrieb entsprechend umschalten.

Gemäß einer weiteren Variante der Basisstation ist vorgesehen, dass diese mit zumindest zwei Sendeleistungspegeln betrieben werden kann, wobei der jeweilige Sendeleistungspegel von der Empfangsqualität der Verbindung zwischen dem Mobilfunkendgerät bzw. den Mobilfunkendgeräten und der Basisstation bestimmt wird.

Vorzugsweise misst die Basisstation die jeweilige Empfangsqualität der von dem oder den Mobilfunkendgeräten empfangenen Signalen und stellt den Sendeleistungspegel entsprechend derart ein, dass bei schlechter Empfangsqualität ein hoher Sendeleistungspegel und bei guter Empfangsqualität ein niedrigerer Leistungspegel ausgewählt wird.

Besonders einfach und damit vorteilhaft kann zur Bestimmung der Empfangsqualität der Signalpegel der Empfangssignale herangezogen werden. Beispielsweise kann die Höhe der empfangenen Signalpegel unmittelbar als Maß für die Empfangsqualität interpretiert und bewertet werden.

Gemäß einer weiteren Variante der Basisstation ist vorgesehen, dass die Basisstation derart ausgestaltet ist, dass sie ihre Sendeeinrichtung abschaltet, sobald das Mobilfunkendgerät mit der Ladeschale der Basisstation in Verbindung tritt, sofern lediglich ein einziges Mobilfunkendgerät an der Basisstation angemeldet ist.

Die Information bzw. das entsprechende Signal, dass sich das Mobilfunkendgerät in der Ladeschale der Basisstation befindet, kann dabei von dem Mobilfunkendgerät erzeugt und an die Basisstation - beispielsweise über die Ladekontakte und/oder über zusätzliche Kontakte-übertragen werden.

Alternativ kann die Basisstation den Ladestrom der Ladeschale selbst überwachen und bei Vorliegen eines Ladestroms ihre Sendeeinrichtung ausschalten. Darüber hinaus kann die Basisstation - beispielsweise über die Ladekontakte und/oder über zusätzliche Kontakte-dem Mobilfunkendgerät ein Steuersignal zum Abschalten der mobilfunkendgeräteseitigen Sendeeinrichtung übermitteln, woraufhin das Mobilfunkendgerät dann seine Sendeeinrichtung abschaltet.

Zur allgemeinen Erläuterung sowie zur Erläuterung der Erfindung zeigen die nachfolgenden Figuren verschiedene Mobilfunkendgeräte und Basisstationen.

In den Figuren werden für alle identischen bzw. vergleichbaren Komponenten dieselben Bezugszeichen verwendet.

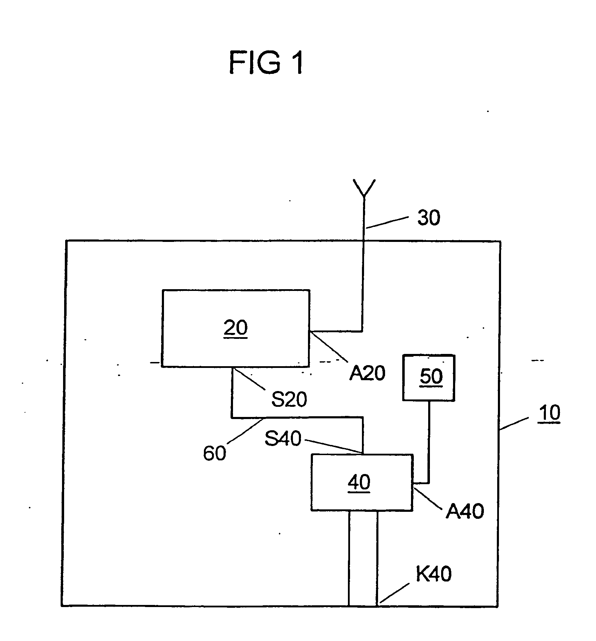

In der Figur 1 erkennt man ein Mobilfunkendgerät 10 mit einer Sende-/Empfangseinrichtung 20. Ein Antennenanschluss A20 der Sende-/Empfangseinrichtung 20 ist mit einer Antenne 30 des Mobilfunkendgerätes verbunden. Ein Steueranschluss S20 der Sende- und Empfangseinrichtung 20 ist mit einem Steueranschluss S40 einer Steuereinrichtung 40 verbunden. Die Steuereinrichtung 40 weist darüber hinaus Ladekontakte K40 auf, mit denen das Mobilfunkendgerät 10 an Ladekontakte einer Ladeschale einer in der Figur 1 nicht gezeigten Basisstation anschließbar ist.

Die Steuereinrichtung 40 ist darüber hinaus über ihren Akkuanschluss A40 an einen Akkumulator bzw. eine Batterie 50 angeschlossen.

Das Mobilfunkendgerät gemäß der Figur 1 wird wie folgt betrieben. Sobald das Mobilfunkendgerät 10 in eine Ladeschale einer in der Figur 1 nicht dargestellten Basisstation eingelegt wird, fließt über die Ladekontakte K40 und die Steuereinrichtung 40 ein Ladestrom zum Akku 50. Sobald ein solcher Ladestrom von der Steuereinrichtung 40 detektiert wird, schaltet die Steuereinrichtung 40 die Sende-/Empfangseinrichtung 20 über die Steuerleitung 60 ab, so dass keine elektromagnetische Sendestrahlung mehr erzeugt wird.

Die Steuereinrichtung 40 macht sich dabei zunutze, dass bei einem Aufliegen des Mobilfunkendgerätes 10 in der Ladeschale der Basisstation keine Funkverbindung zu der Basisstation aufgebaut sein muss, da gegebenenfalls Steuersignale von der Basisstation zur Steuereinrichtung 40 bzw. umgekehrt auch über die Ladekontakte K40 übertragen werden können. Hierzu ist die Steuereinrichtung 40 entsprechend ausgestaltet, so dass sie durch ein von der Basisstation über die Ladekontakte K40 zur Steuereinrichtung 40 übertragenen "Aufwecksignal" derart umgeschaltet wird, dass sie die Sendeeinrichtung 20 wieder voll in Betrieb nimmt, so dass eine Funkverbindung zwischen der Sendeeinrichtung 20 und der Basisstation aufgebaut werden kann.

Zusammengefasst schaltet die Steuereinrichtung 40 die Sende-/Empfangseinrichtung 20 ab, sobald das Mobilfunkendgerät 10 in einer Ladeschale einer Basisstation aufliegt.

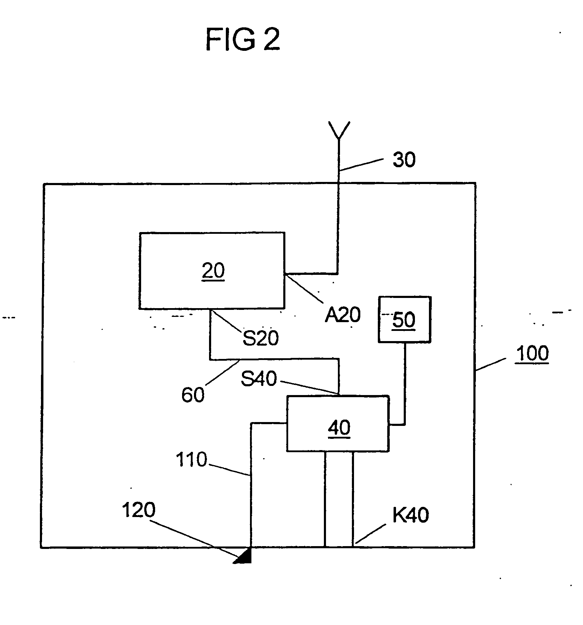

In der Figur 2 ist ein Mobilfunkendgerät 100 dargestellt, dessen Steuereinrichtung 40 mittels einer Steuerleitung 110 mit einem federnd gelagerten Schaltelement 120 verbunden ist. Sobald das Mobilfunkendgerät 100 in die Ladeschale einer Basisstation eingeführt wird, wird das elektrische Schaltelement 120 umgeschaltet. Durch dieses Umschalten des elektrischen Schaltelements 120 wird der Steuereinrichtung 40 signalisiert, dass das Mobilfunkendgerät 100 in der Ladeschale der Basisstation liegt. Sofort anschließend schaltet dann die Steuereinrichtung 40 die Sende-/Empfangseinrichtung 20 über die Steuerleitung 60 ab, so dass bei einem Aufliegen des Mobilfunkendgerätes 100 in der Ladeschale keine elektromagnetische Strahlung durch die Sende-/Empfangseinrichtung 20 generiert wird.

Im Übrigen entspricht das Mobilfunkendgerät 100 gemäß der Figur 2 dem Mobilfunkendgerät 10 gemäß der Figur 1.

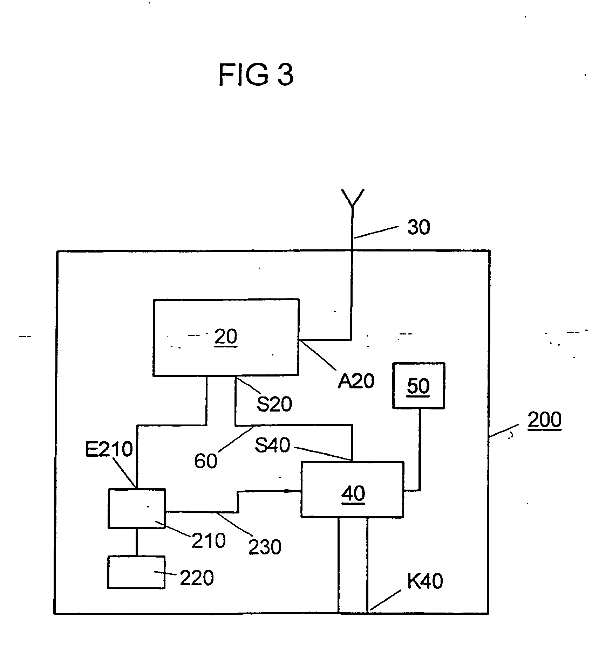

In der Figur 3 erkennt man ein Mobilfunkendgerät 200, das eine Empfangspegelmesseinrichtung 210 aufweist. Die Empfangspegelmesseinrichtung 210 ist mit einem Eingang E210 an die Sende-/Empfangseinrichtung 20 angeschlossen und misst den jeweiligen Empfangspegel der von der Sende-/Empfangseinrichtung 20 empfangenen Empfangssignale.

Die von der Empfangspegelmesseinrichtung 210 gemessenen Empfangspegel werden mit vorgegebenen, in einem mit der Empfangspegelmesseinrichtung 210 verbundenen Speicher 220 gespeicherten Referenzwerten verglichen. Je nach dem Vergleichsergebnis wird über eine Verbindungsleitung 230 zwischen der Empfangspegelmesseinrichtung 210 und der Steuereinrichtung 40 die Steuereinrichtung 40 derart angesteuert, dass diese über ihre Steuerleitung 60 der Sende-/Empfangseinrichtung 20 den jeweils einzuhaltenden Sendeleistungspegel mitteilt.

Konkret wird die Empfangspegelmesseinrichtung 210 die Steuereinrichtung 40 derart ansteuern, dass bei einem nur geringen Empfangspegel der von der Sende-/Empfangseinrichtung 20 empfangenen Signale die Sende-/Empfangseinrichtung 20 mit einer hohen Sendeleistung sendet; denn bei einem nur sehr kleinen Empfangspegel ist davon auszugehen, dass die Übertragungsverbindung zwischen dem Mobilfunkendgerät 200 und der jeweiligen Basisstation sehr schlecht ist, so dass zum Übertragen von Signalen eine hohe Sendeleistung erforderlich ist.

Stellt die Empfangspegelmesseinrichtung 210 hingegen fest, dass ein sehr hoher Empfangspegel der von der Sende-/Empfangseinrichtung 20 empfangenen Signale vorliegt, so steuert sie über die Leitung 230 die Steuereinrichtung 40 derart an, dass diese wiederum über die Steuerleitung 60 der Sende-/Empfangseinrichtung 20 eine nur geringe Sendeleistung vorgibt.

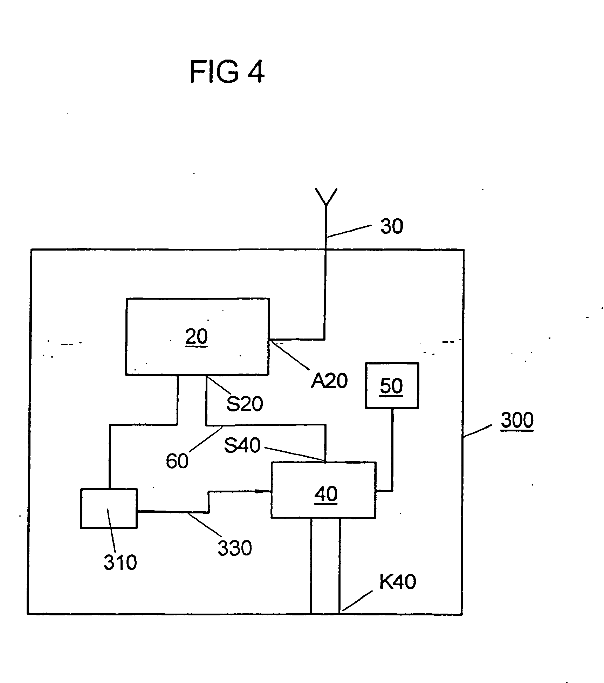

In der Figur 4 ist ein Ausführungsbeispiel für ein Mobilfunkendgerät 300 dargestellt, das mit einer Decodiereinrichtung 310 ausgestattet ist. Die Decodiereinrichtung 310 ist eingangsseitig mit der Sende-/Empfangseinrichtung 20 und ausgangsseitig mit der Steuereinrichtung 40 verbunden.

Die Decodiereinrichtung 310 wertet die von der Sende-/Empfangseinrichtung 20 empfangenen Signale der Basisstation aus und prüft, ob in den Empfangssignalen ein Steuersignal von der Basisstation enthalten ist, mit dem eine vorgegebene Sendeleistung bzw. ein vorgegebener Sendeleistungspegel für die Sende-/Empfangseinrichtung 20 des Mobilfunkendgerätes 300 enthalten ist.

Falls dies der Fall ist, so erzeugt die Decodiereinrichtung 310 ein entsprechendes Steuersignal S und überträgt dieses über die Steuerleitung 320 zu der Steuereinrichtung 40, die wiederum die Sende-/Empfangseinrichtung 20 derart ansteuert, dass die von der Basisstation vorgegebene Sendeleistung bzw. der entsprechende Sendesignalpegel von der Sende-/Empfangseinrichtung 20 eingehalten wird.

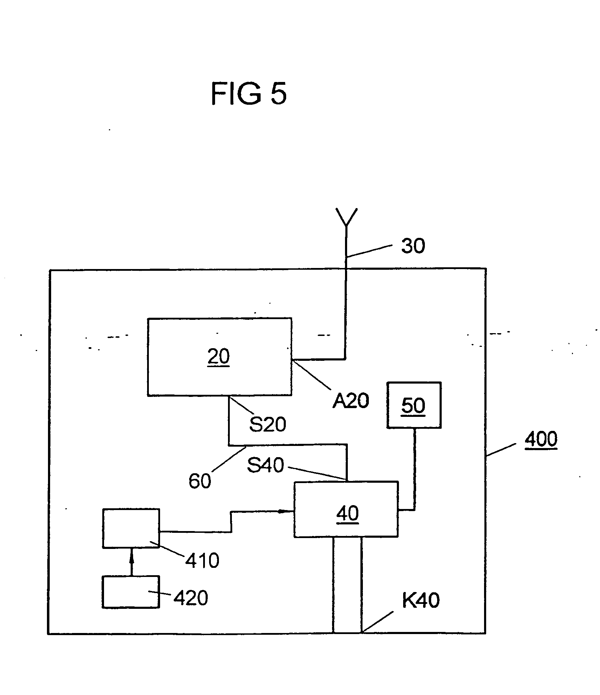

In der Figur 5 ist ein Mobilfunkendgerät 400 dargestellt, das mit einer Sprachfiltereinrichtung 410 ausgestattet ist. Die Sprachfiltereinrichtung 410 ist eingangsseitig mit einem Mikrofon 420 und ausgangsseitig mit der Steuereinrichtung 40 verbunden.

Die Funktion der Sprachfiltereinrichtung 410 besteht darin, die von dem Mikrofon 420 erzeugten Audiosignale dahingehend zu filtern, dass ausschließlich Sprachsignale zu der Steuereinrichtung 40 gelangen. Andere Audiosignale, wie beispielsweise Umgebungsrauschen und dergleichen, werden von der Sprachfiltereinrichtung 410 herausgefiltert und unterdrückt, so dass diese Audiosignalanteile nicht zu der Steuereinrichtung 40 gelangen können.

Die Steuereinrichtung 40 ist in dem Mobilfunkendgerät 400 darüber hinaus derart ausgestaltet, dass es die Sende-/Empfangseinrichtung 20 ausschließlich dann elektromagnetische Sendeleistung erzeugen lässt, wenn von der Sprachfiltereinrichtung 410 Sprachsignale "geliefert" werden. Liegen in der Steuereinrichtung 40 hingegen keine Sprachsignale seitens der Sprachfiltereinrichtung 410 vor, so steuert die Steuereinrichtung 40 die Sende-/Empfangseinrichtung 20 derart an, dass keine elektromagnetischen Wellen über die Antenne 30 abgestrahlt werden.

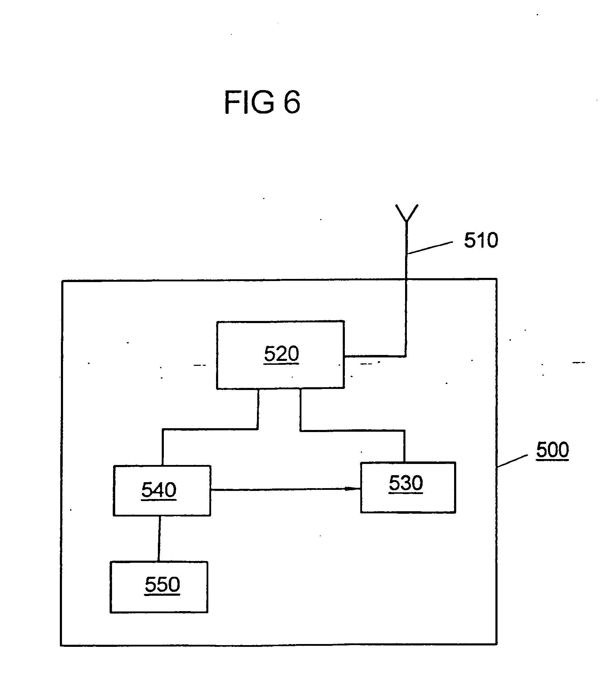

In der Figur 6 ist eine Basisstation 500 dargestellt, die eine Antenne 510, eine mit der. Antenne in Verbindung stehende Sende-/Empfangseinrichtung 520 und eine mit der Sende-/Empfangseinrichtung 520 verbundene Steuereinrichtung 530 aufweist.

Die Basisstation 500 ist darüber hinaus mit einer Empfangspegelmesseinrichtung 540 ausgestattet, die eingangsseitig mit der Sende-/Empfangseinrichtung 520 und ausgangsseitig mit der Steuereinrichtung 530 verbunden ist. Die Empfangspegelmesseinrichtung 540 hat die Aufgabe, die von der Sende-/Empfangseinrichtung 520 empfangenen Signale der mit der Basisstation 500 in Verbindung stehenden Mobilfunkendgeräte bezüglich des Empfangssignalpegels auszuwerten; konkret misst die Empfangspegelmesseinrichtung 540 fortlaufend die Signalpegel der empfangenen Signale und vergleicht die Empfangspegel mit in einem Speicher 550 abgespeicherten, vorgegebenen Referenzwerten.

Stellt die Empfangspegelmesseinrichtung 540 dabei fest, dass beispielsweise die gemessenen Empfangspegel einen vorgegebenen Grenzwert unterschreiten, so steuert sie die Steuereinrichtung 530 derart an, dass diese der Sende-/Empfangseinrichtung 520 einen besonders hohen Sendepegel vorgibt. Konkret wird durch die Empfangspegelmesseinrichtung 540 erreicht, dass je nach den Sende-/Empfangsbedingungen der Übertragungsstrecke zwischen der Basisstation 500 und den angeschlossenen Mobilfunkendgeräten ein passender Sendesignalpegel für die Sende-/Empfangseinrichtung 520 eingestellt wird. Der von-der Sende-/Empfangseinrichtung 520 abgegebene Sendesignalpegel ist dabei davon abhängig, wie hoch der jeweils empfangene Signalpegel der Empfangssignale ist. Ziel dieser Maßnahme ist dabei, dass stets mit der geringstmöglichen Sendeleistung gesendet wird, um die Strahlungsbelastung durch die Basisstation so gering wie möglich zu halten.

Im Übrigen kann die Basisstation 500 derart ausgestaltet sein, dass sie in Zeitintervallen, in denen keine Telefongespräche zu übertragen sind, lediglich einmal in der Sekunde Synchronisationssignale an die Mobilfunkendgeräte ausstrahlt.

Darüber hinaus kann die Basisstation 500 derart ausgestaltet sein, dass sie Sendebursts zum Synchronisieren der an die Basisstation 500 angeschlossenen Mobilfunkendgeräte ausschließlich in den Frames 0 und 8 im DECT-Standard übersendet.

In den Figuren 1 bis 6 ist die Funktionsweise des erfindungsgemäßen Mobilfunkendgerätes und der erfindungsgemäßen Basisstation anhand von schematischen Blockschaltbildern erläutert. Die gezeigten und erläuterten Blöcke können durch separate Funktionseinheiten gebildet sein; stattdessen kann die Funktion einzelner oder ggf. auch aller Blöcke durch einen oder ggf. mehrere Mikroprozessoren oder sonstige integrierte Schaltungen übernommen werden.

Bei den Mobitiunkendgeräten gemäß den Figuren 1 bis 5 handelt es sich bevorzugt um DECT-Mobilteile schnurloser DECT- Telefone. Bei der Basisstation gemäß der Figur 6 handelt es sich bevorzugt um eine DECT-Basisstation eines schnurlosen DECT-Telefons.

### Bezugszeichen

- 10: Mobilfunkendgerät
- 20: Sende-/Empfangseinrichtung
- 40: Steuereinrichtung
- 50: Akku
- 60: Steuerleitung
- 100: Mobilfunkendgerät
- 110: Leitung
- 120: Schaltelement
- 200: Mobilfunkendgerät
- 210: Empfangspegelmesseinrichtung
- 220: Speicher
- 230: Steuerleitung
- 300: Mobilfunkengerät
- 310: Decodiereinrichtung
- 320: Steuerleitung
- 400: Mobilfunkendgerät
- 410: Sprachfiltereinrichtung
- 420: Mikrofon
- 500: Basisstation
- 510: Antenne
- 520: Sende-/Empfangseinrichtung
- 530: Steuereinrichtung
- 540: Empfangspegelmesseinrichtung
- 550: Speicher
- K40: Ladekontakte
- S40: Steueranschluss
- A40: Akku-Anschluss
- A20: Antennenanschluss

## Patentansprüche

1. Basisstation mit einer Sendeeinrichtung, die nach einem vorgegebenen Funkstandard, insbesondere dem DECT-Standard arbeitet, wobei die Basisstation (500) zumindest zwei Betriebsarten aufweist, nämlich eine Normalbetriebsart und mindestens eine weitere Betriebsart, bei der im Vergleich zur Normalbetriebsart zumindest im zeitlichen Mittel weniger Strahlung erzeugt wird als in der Normalbetriebsart,
**dadurch gekennzeichnet, dass** im Falle eines Sendebetriebs nach dem DECT-Standard die Sendebursts in der weiteren Betriebsart ausschließlich auf die Frames 0 und 8 beschränkt werden, oder
dass in der weiteren Betriebsart die Basisstation ausschließlich einmal in der Sekunde Synchronisationssignale an die angeschlossenen Mobilfunkendgeräte sendet.

2. Basisstation nach Anspruch 1, **dadurch gekennzeichnet, dass** die Basisstation (500) derart ausgestaltet ist, dass sie selbsttätig oder benutzerseitig von der Normalbetriebsart in die weitere Betriebsart und/oder umgekehrt umschaltbar ist.

## Claims

1. Base station with a transmitter unit which operates in accordance with a predefined radio standard, in particular the DECT standard, which base station (500) has at least two operating modes, namely a normal operating mode and at least one other operating mode in which, compared with the normal operating mode, less radiation is generated at least as a time average than in the normal operating mode, **characterised in that** when transmitting in accordance with the DECT standard, transmission bursts in the other operating mode are limited exclusively to frames 0 and 8 or, in the other operating mode, the base station transmits synchronisation signals to the connected mobile radio terminals exclusively once a second.

2. Base station as claimed in claim 1, **characterised in that** the base station (500) is configured so that it can be switched automatically or by the user from the normal operating mode to the other operating mode and/or vice versa.

## Revendications

1. Station de base comprenant un dispositif émetteur qui fonctionne selon une norme de radiotéléphonie prédéfinie, en particulier la norme DECT, la station de base (500) opérant selon au moins deux modes de fonctionnement, à savoir un mode de fonctionnement normal et au moins un autre mode de fonctionnement dans lequel, comparé au mode de fonctionnement normal, la quantité de rayonnement générée est inférieure, du moins en moyenne dans le temps, à celle du mode de fonctionnement normal, **caractérisée en ce que**, dans le cas d'un mode d'émission conforme à la norme DECT, les salves d'émission dans l'autre mode de fonctionnement sont limitées exclusivement aux trames 0 et 8, ou **en ce que**, dans l'autre mode de fonctionnement, la station de base envoie des signaux de synchronisation exclusivement une fois par seconde aux terminaux de radiotéléphonie mobile connectés.

2. Station de base selon la revendication 1, **caractérisée en ce que** la station de base (500) est configurée de telle façon qu'elle peut passer du mode de fonctionnement normal à l'autre mode de fonctionnement et/ou inversement de manière automatique ou commandée par l'utilisateur.
